# FASCICULE DE BREVET EUROPEEN

(11) **EP 2 714 515 B1**
(45) Date de publication et mention de la délivrance du brevet: **08.07.2015**
(21) Numéro de dépôt: 12731081.1
(22) Date de dépôt: 29.05.2012
(51) Int. Cl.: B64D 13/08, B64D 13/06

(54) **SYSTÈME DE CONDITIONNEMENT D'AIR D'UN COMPARTIMENT POUR PASSAGERS D'UN AÉRONEF**
KLIMAANLAGENSYSTEM FÜR EINEN FLUGZEUGPASSAGIERRAUM
AIR CONDITIONING SYSTEM FOR AN AIRCRAFT PASSENGER COMPARTMENT

(30) Priorité: 30.05.2011 FR 1154693
(43) Date de publication de la demande: 09.04.2014
(73) Titulaire: Turbomeca, 64511 Bordes (FR)
(72) Inventeur: HOUSSAYE, Laurent, F-64110 Saint Faust (FR); MINEL, Laurent, F-64000 Pau (FR)
(74) Mandataire: Bringer, Mathieu
(86) Numéro de dépôt international: PCT/FR2012/051196
(87) Numéro de publication internationale: WO 2012/164214

(56) Documents cités:
- EP-A1- 1 880 939
- FR-A1- 2 485 473
- US-A- 5 135 161

## Description

La présente invention concerne le domaine de l'aéronautique et plus particulièrement un système de conditionnement d'air d'un compartiment de passagers d'un aéronef.

Pour assurer le confort des passagers d'un aéronef, il est connu et obligatoire de ventiler le compartiment des passagers (appelé également cabine passagers) en faisant circuler un flux d'air neuf dans le compartiment. L'air de ventilation neuf est prélevé à l'extérieur de l'aéronef et est conduit par un circuit d'alimentation dans le compartiment. La température du flux d'air de ventilation est régulée de manière à maintenir la température du compartiment dans des limites aptes à assurer le confort des passagers. Ainsi, si la plupart du temps il est nécessaire de refroidir le flux d'air de ventilation pour compenser la chaleur générée par les passagers et des équipements présents dans le compartiment (éclairage, etc.), il demeure que le flux d'air de ventilation doit être chauffé dans certaines conditions, en particulier par temps froid, notamment dans la phase de chauffage initial du compartiment.

Un example de système de ventilation est montré dans le document EP 1 880 939 A1.

La ventilation du compartiment représente une consommation énergétique qu'il convient de réduire autant que possible aussi bien au cours du vol de l'aéronef que lorsque l'aéronef est en stationnement dans un aéroport et que ses moteurs sont éteints. Pour ventiler le compartiment de l'aéronef lors de son stationnement, il est nécessaire de recourir à un dispositif de puissance auxiliaire (APU pour Auxiliary Power Unit) monté sur l'aéronef qui fournit de l'énergie à l'aéronef et permet ainsi la ventilation du compartiment de passagers.

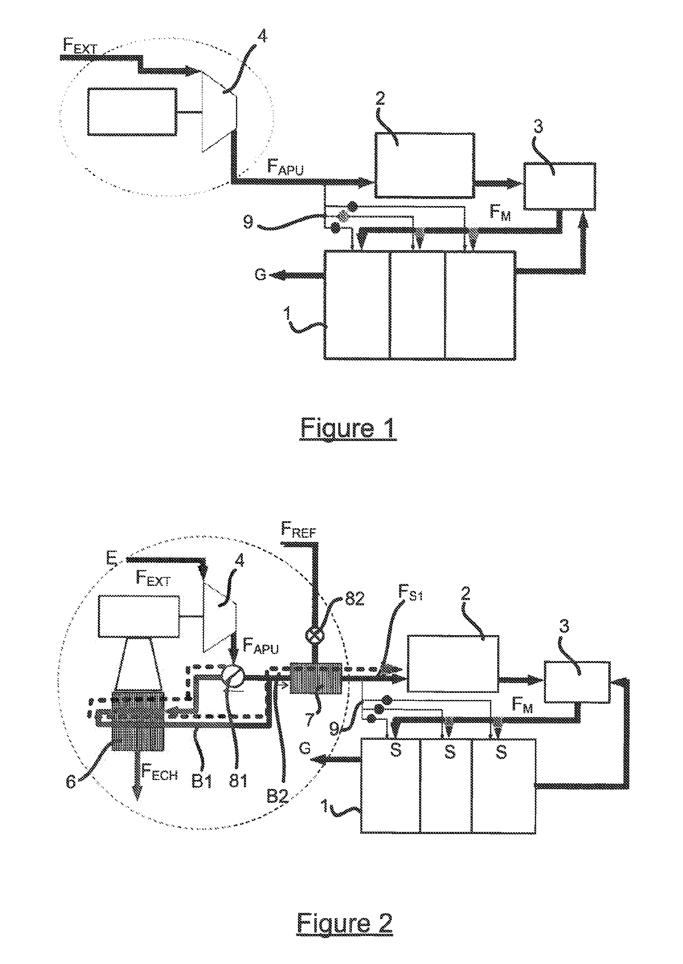

A titre d'exemple, en référence à la figure 1 représentant un système de conditionnement d'air selon l'art antérieur, un compartiment 1 dans lequel sont situés des passagers de l'aéronef est alimenté par un circuit d'alimentation en air comportant :
- un dispositif de puissance auxiliaire 4 fournissant un flux d'air sous pression F_{APU},
- un pack de conditionnement d'air 2 recevant le flux d'air sous pression F_{APU} et régulant sa température, le pack de conditionnement d'air 2 comportant de préférence un groupe froid pour refroidir le flux d'air sous pression F_{APU},
- un mélangeur d'air 3 recevant un flux d'air régulé en température du pack de conditionnement 2 et un flux d'air du compartiment 1 recyclé pour former un flux d'air mélangé F_{M} qui alimente le compartiment 1 et
- des vannes d'injection d'air chaud 9 permettant de moduler de manière fine la puissance thermique injectée dans les diverses zones du compartiment 1 afin d'en contrôler localement la température, un flux d'air s'échappant du compartiment 1 après circulation de ce dernier.

De manière classique, le dispositif de puissance auxiliaire 4 fournit un flux d'air F_{APU} identique quel que soit le mode de fonctionnement (chauffage ou refroidissement du compartiment 1). Cela présente un inconvénient étant donné que pour fournir de manière efficace un flux d'air froid, le pack de conditionnement d'air 2 nécessite idéalement un flux d'air à haute pression tandis que pour fournir un flux d'air chaud, le pack de conditionnement d'air 2 nécessite un flux d'air à pression modérée.

En pratique, le dispositif de puissance auxiliaire 4 se contente de fournir, en toutes circonstances, un flux d'air F_{APU} à haute pression au pack de conditionnement d'air 2. Ainsi, lorsqu'il faut réchauffer le compartiment 1, le flux d'air haute pression F_{APU} est détendu, dans le pack de conditionnement d'air 2, pour être injecté dans le compartiment à la pression du compartiment. Autrement dit, une part importante de l'air comprimé par le dispositif de puissance auxiliaire 4 a été comprimée à un taux de compression excessif par rapport au minimum requis pour son utilisation en tant que source chaude. Or, plus le taux de compression est élevé et plus la consommation de carburant est élevée. Ce taux de compression excessif représente une dépense énergétique superflue que cette invention vise à supprimer.

L'invention vise à optimiser l'utilisation du flux d'air comprimé fourni par le dispositif de puissance auxiliaire 4 tout en limitant le coût énergétique lié au chauffage dudit flux d'air.

Afin d'éliminer au moins certains de ces inconvénients, l'invention concerne un système de conditionnement d'air d'un compartiment pour passagers d'un aéronef, le système comportant :
- un circuit d'alimentation en air reliant au moins une entrée d'air extérieur à au moins une sortie de distribution d'air apte à déboucher dans le compartiment,
- un dispositif auxiliaire de puissance monté dans ledit circuit d'alimentation et agencé pour comprimer un flux d'air dans le circuit d'alimentation,
   le circuit d'alimentation comportant :
- une première branche de chauffage, reliant le dispositif auxiliaire de puissance à la sortie de distribution d'air, dans laquelle sont montés des moyens de chauffage du flux d'air,
- une deuxième branche de refroidissement, reliant le dispositif auxiliaire de puissance à la sortie de distribution d'air, et
- des moyens de commutation adaptés pour répartir le flux d'air entre la première branche de chauffage et la deuxième branche de refroidissement.

Les moyens de commutation permettent avantageusement d'utiliser le flux d'air comprimé par le dispositif auxiliaire de puissance selon deux modes de fonctionnement différents qui sont optimisés soit pour le chauffage, soit pour le refroidissement. En outre, les moyens de chauffage permettent avantageusement d'apporter des calories au flux d'air et ainsi d'éviter une consommation énergétique excessive de la part du dispositif auxiliaire de puissance.

De manière avantageuse, l'apport de calories permet de diminuer le taux de compression du dispositif auxiliaire de puissance et donc sa consommation de carburant.

De préférence, la deuxième branche de refroidissement comporte des moyens de refroidissement du flux d'air du circuit d'alimentation. Les moyens de refroidissement permettent avantageusement d'apporter des frigories au flux d'air et ainsi d'augmenter la puissance frigorifique du système pour, par exemple, limiter la trainée de l'aéronef, améliorer le refroidissement de zones critiques, limiter les dimensions et la masse du dispositif auxiliaire de puissance, etc.

De manière préférée, les moyens de refroidissement se présentent sous la forme d'un échangeur de chaleur agencé pour apporter des frigories au flux d'air du circuit d'alimentation par circulation d'un flux d'air de refroidissement. De préférence, le flux d'air de refroidissement est un flux d'air extérieur prélevé en dehors de l'aéronef. Ainsi, le flux d'air comprimé par le dispositif auxiliaire de puissance est refroidi de manière externe sans apport d'énergie propre à l'aéronef.

Selon un aspect de l'invention, les moyens de commutation sont agencés pour modifier le point de fonctionnement du dispositif auxiliaire de puissance lors du chauffage. De manière avantageuse, les moyens de commutation sont activés lors du chauffage afin de limiter la puissance du dispositif auxiliaire de puissance et ainsi limiter sa consommation de carburant. Tout défaut de compression entraîne une baisse de la température du flux d'air sous pression qui est avantageusement compensée par l'apport d'énergie thermique fourni par les moyens de chauffage. Autrement dit, le dispositif de puissance est utilisé de manière optimale en fonction du but recherché (chauffage ou refroidissement).

De préférence, les moyens de chauffage se présentent sous la forme d'un échangeur de chaleur agencé pour apporter des calories au flux d'air du circuit d'alimentation par circulation d'un flux d'air de chauffage issu des gaz d'échappement du dispositif auxiliaire de puissance. On tire avantageusement partie de la chaleur fournie par le dispositif auxiliaire de puissance pour chauffer le flux d'air comprimé.

Selon un aspect de l'invention, la deuxième branche de refroidissement comportant des moyens de refroidissement du flux d'air du circuit d'alimentation, la première branche de chauffage est reliée à la deuxième branche de refroidissement en amont des moyens de refroidissement de manière à faire circuler le flux d'air chauffé dans les moyens de refroidissement. Une telle architecture du circuit d'alimentation présente un faible encombrement et peut être facilement intégrée à un aéronef actuel.

De préférence, les moyens de commutation sont agencés pour inactiver les moyens de refroidissement lorsqu'un flux d'air chauffé circule dans les moyens de refroidissement.

Selon un autre aspect de l'invention, le circuit d'alimentation comportant un mélangeur alimentant la sortie de distribution d'air, la première branche de chauffage, reliant le dispositif auxiliaire de puissance au mélangeur, et la deuxième branche de refroidissement, reliant le dispositif auxiliaire de puissance au mélangeur, sont distinctes. Ainsi, on peut avantageusement ventiler le compartiment en gérant de manière indépendante les flux d'air des branches de chauffage et de refroidissement.

De préférence, le dispositif auxiliaire de puissance comportant une sortie d'air basse pression et une sortie d'air haute pression, la première branche de chauffage est reliée à la sortie d'air basse pression et la deuxième branche de refroidissement est reliée à la sortie d'air haute pression.

Ainsi, on dispose de manière avantageuse d'une branche basse pression adaptée pour le chauffage et d'une branche haute pression adaptée pour le refroidissement. La ventilation peut être paramétrée de manière précise et optimale en fonction des besoins.

De préférence encore, le circuit d'alimentation comporte une branche de déviation montée en parallèle à la première branche de chauffage de manière à alimenter le mélangeur avec un flux d'air basse pression non chauffé par les moyens de chauffage. Ainsi, le flux d'air issu du dispositif auxiliaire de puissance peut être avantageusement dévié des moyens de chauffage pour alimenter le mélangeur avec un flux d'air non chauffé, la température des flux d'air reçus par le mélangeur pouvant être ainsi contrôlée de manière fine.

L'invention sera mieux comprise à la lecture de la description qui va suivre, donnée uniquement à titre d'exemple, et se référant aux dessins annexés sur lesquels :
- la figure 1 est une représentation schématique d'un système de conditionnement d'air selon l'art antérieur ;
- la figure 2 est une représentation schématique d'une première forme de réalisation d'un système de conditionnement d'air selon l'invention lors du chauffage du compartiment de passagers ;
- la figure 3 est une représentation schématique de la première forme de réalisation de la figure 2 lors du refroidissement du compartiment de passagers ; et
- la figure 4 est une représentation schématique d'une deuxième forme de réalisation d'un système de conditionnement d'air selon l'invention.

Il faut noter que les figures exposent l'invention de manière détaillée pour mettre en oeuvre l'invention, lesdites figures pouvant bien entendu servir à mieux définir l'invention le cas échéant.

A titre d'exemple, en référence aux figures 2 à 4 représentant deux formes de réalisation d'un système de conditionnement d'air selon l'invention, le système de conditionnement d'air est agencé pour ventiler un compartiment 1 d'un aéronef, en particulier, un compartiment 1 dans lequel sont situés les passagers de l'aéronef.

Dans cet exemple, le système de conditionnement d'air selon l'invention comporte un circuit d'alimentation en air comprenant un dispositif de puissance auxiliaire 4 fournissant un flux d'air sous pression, un pack de conditionnement d'air 2 recevant le flux d'air sous pression et régulant sa température et un mélangeur 3 recevant un flux d'air du pack de conditionnement 2 et un flux d'air du compartiment 1 recyclé pour former un flux d'air mélangé F_{M} qui alimente le compartiment 1 comme représenté sur la figure 2. A cet effet, le circuit d'alimentation comporte des sorties de distribution d'air S débouchant dans le compartiment 1. Un flux d'air de sortie G s'échappe du compartiment 1 après circulation dans ce dernier.

Selon l'invention, chaque circuit d'alimentation comporte une première branche de chauffage B1, reliant le dispositif auxiliaire de puissance 4 au mélangeur 3, dans laquelle sont montés des moyens de chauffage 6, une deuxième branche de refroidissement B2, reliant le dispositif auxiliaire de puissance 4 au mélangeur 3, dans laquelle sont montés des moyens de refroidissement 7 et des moyens de commutation 81-86 adaptés pour répartir le flux d'air entre la première branche de chauffage B1 et la deuxième branche de refroidissement B2.

Les moyens de commutation 81-86 permettent de modifier le fonctionnement du circuit d'alimentation lorsque celui-ci doit chauffer ou refroidir le compartiment 1. Cette modification du circuit d'alimentation modifie le point de fonctionnement du dispositif de puissance auxiliaire 4 ce qui limite sa consommation de carburant. Grâce à l'invention, le système de conditionnement d'air consomme moins d'énergie que dans l'art antérieur, les frigories ou calories étant apportées par des moyens de chauffage 6 et de refroidissement 7 distincts du pack de conditionnement d'air 2.

Dans les deux formes de réalisation qui vont être présentées par la suite, le dispositif de puissance auxiliaire 4 (plus connu sous sa dénomination anglaise APU pour « Auxiliary Power Unit ») comporte un compresseur de charge qui permet de comprimer le flux d'air prélevé à l'extérieur de l'aéronef au niveau de l'entrée d'air E du circuit d'alimentation. Les moyens de chauffage 6 se présentent sous la forme d'un échangeur de chaleur 6 agencé pour apporter des calories au flux d'air de la première branche de chauffage B1 par circulation d'un flux d'air de chauffage F_{ECH} issu des gaz d'échappement du dispositif auxiliaire de puissance 4 comme représenté sur les figures 2 à 4. De manière préférée, les moyens de chauffage 6 sont montés directement au niveau de l'échappement du dispositif auxiliaire de puissance 4 afin de tirer profit de la chaleur générée par le dispositif auxiliaire de puissance 4 au cours de son fonctionnement. De manière similaire, dans les deux formes de réalisation, les moyens de refroidissement 7 se présentent sous la forme d'un échangeur de chaleur 7 agencé pour apporter des frigories au flux d'air de la deuxième branche de refroidissement B2 par circulation d'un flux d'air de refroidissement F_{REF} prélevé à l'extérieur de l'aéronef comme représenté sur les figures 2 à 4. Il va de soi que les moyens de chauffage 6 ou de refroidissement 7 pourraient se présenter sous des formes diverses, l'idéal étant que les moyens 6, 7 soient aptes à fournir des calories et des frigories obtenues par récupération d'énergie et non par consommation supplémentaire.

### 1. Première forme de réalisation

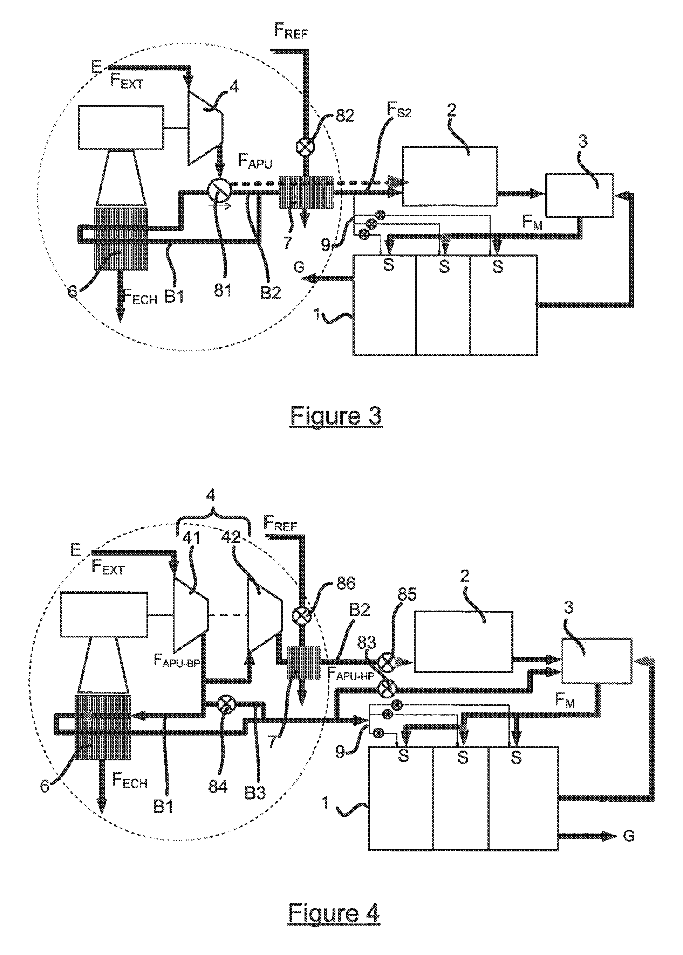

Selon une première forme de réalisation de l'invention, en référence aux figures 2 et 3, le dispositif de puissance auxiliaire 4 reçoit un flux d'air F_{EXT}, prélevé à l'extérieur de l'aéronef au niveau de l'entrée d'air E, et le comprime pour former un flux d'air comprimé F_{APU} alimentant le circuit d'alimentation.

Le circuit d'alimentation comporte des moyens de commutation se présentant, dans cet exemple, sous la forme d'une première vanne 81 agencée pour recevoir le flux d'air comprimé F_{APU} et le répartir entre la première branche de chauffage B1 et la deuxième branche de refroidissement B2 et d'une deuxième vanne 82 agencée pour moduler le débit du flux d'air de refroidissement F_{REF} apportant des frigories au flux d'air comprimé F_{APU} circulant dans les moyens de refroidissement 7 de la deuxième branche de refroidissement B2. Ainsi, la deuxième vanne 82 permet de réguler le degré de refroidissement des moyens de refroidissement 7.

Afin de limiter l'encombrement et la complexité du système de conditionnement d'air, la première branche de chauffage B1 est reliée à la deuxième branche de refroidissement B2 en amont des moyens de refroidissement 7 de manière à faire circuler le flux d'air chauffé dans les moyens de refroidissement 7. Une telle architecture du circuit d'alimentation présente un faible encombrement et peut être plus facilement intégrée à un aéronef actuel. Les termes « amont » et « aval » sont définis par rapport à la circulation du flux d'air d'amont en aval dans le circuit d'alimentation.

Dans cette première forme de réalisation, le pack de conditionnement d'air 2 comporte deux branches en parallèle (non représentées), dont une comporte un dispositif de refroidissement et dont l'autre en est dénuée, et une vanne de répartition agencée pour répartir le flux d'air entrant dans le pack de conditionnement d'air 2 entre les deux branches. Lors du chauffage, la vanne de répartition du pack de conditionnement d'air est commandée pour guider le flux d'air vers la branche dénuée de dispositif de refroidissement ce qui a pour conséquence de baisser la pression dans le circuit d'alimentation sensiblement à la pression du compartiment de passagers 1. Le dispositif de puissance auxiliaire 4 modifie alors son point de fonctionnement pour travailler à une pression plus basse, moins consommatrice de carburant. La vanne de répartition du pack de conditionnement d'air 2 appartient aux moyens de commutation du système de conditionnement et permet avantageusement de modifier le point de fonctionnement du compresseur.

En référence à la figure 2, les moyens de commutation 81, 82 sont avantageusement commandables de manière à ce que lorsque la première vanne 81 est ouverte pour guider le flux d'air, totalement ou partiellement, vers la première branche de chauffage B1, la deuxième vanne 82 est alors fermée pour empêcher la circulation d'un flux d'air de refroidissement F_{REF}, prélevé à l'extérieur de l'aéronef, dans les moyens de refroidissement 7. La commande peut être transmise par tout élément du système de conditionnement, en particulier, par le pack de conditionnement d'air 2. Ainsi, lorsqu'une commande de chauffage est transmise au système de conditionnement d'air, le flux d'air comprimé F_{APU} circule successivement dans les moyens de chauffage 6 de la première branche de chauffage B1 et les moyens de refroidissement 7 de la deuxième branche de refroidissement B2 mais n'est pas refroidi étant donné que le flux d'air de refroidissement F_{REF} est bloqué par la deuxième vanne 82 (la circulation du flux d'air comprimé F_{APU} est représentée en traits pointillés sur la figure 2). Ainsi, le pack de conditionnement d'air 2 reçoit un flux d'air de sortie F_{S1} chauffé à la température désirée, et dont la pression sera d'autant plus basse que le besoin en chauffage fixé par le pack de conditionnement d'air 2 sera important.

Cela est avantageux d'un point de vue énergétique, les ressources énergétiques de l'aéronef étant préservées. En effet, les calories apportées au flux d'air de sortie F_{S1} ont été récupérées à l'échappement du dispositif de puissance auxiliaire 4.

En référence à la figure 3, de manière similaire, les moyens de commutation 81, 82 sont avantageusement commandables de manière à ce que lorsque la première vanne 81 est ouverte, totalement ou partiellement, vers la deuxième branche de refroidissement B2, la deuxième vanne 82 est alors ouverte pour autoriser la circulation d'un flux d'air de refroidissement F_{REF}, prélevé à l'extérieur de l'aéronef, dans les moyens de refroidissement 7. Ainsi, lorsqu'une commande de refroidissement est transmise au système de conditionnement d'air, le flux d'air comprimé F_{APU} est orienté préférentiellement dans les moyens de refroidissement 7 de la deuxième branche de refroidissement B2 pour être refroidi par le flux d'air de refroidissement F_{REF} (la circulation du flux d'air comprimé F_{APU} est représentée en traits pointillés sur la figure 3). Ainsi, le pack de conditionnement d'air 2 reçoit un flux d'air de sortie F_{S2} qui est sensiblement pré-refroidi. Le flux d'air de ventilation lorsqu'il est distribué dans le compartiment 1 est ainsi refroidi, d'une part, par les moyens de refroidissement 7 et, d'autre part, par le pack de conditionnement d'air 2. De manière globale, les moyens de refroidissement 7 contribuent à augmenter la puissance frigorifique globale du système de conditionnement d'air.

Le surplus de puissance frigorifique peut être valorisé selon diverses alternatives ou combinaisons :
- réduire le travail de compression du compresseur de charge du dispositif de puissance auxiliaire 4 (et donc réduire la taille, la masse, l'encombrement, la consommation du dispositif auxiliaire de puissance 4 à iso performance frigorifique),
- réduire le flux d'air froid extérieur utilisé par le pack de conditionnement d'air 2 comme source froide et ainsi diminuer la trainée induite sur l'aéronef en vol,
- augmenter la performance frigorifique du système dans certains cas de fonctionnement particulièrement critiques.

Dans cet exemple, le compresseur de charge du dispositif auxiliaire de puissance 4 est un compresseur centrifuge à calage variable, fonctionnant à vitesse variable, capable d'adapter son point de fonctionnement en fonction des conditions de débit/pression fixées en aval du dispositif auxiliaire de puissance 4. Il va de soi que le compresseur pourrait se présenter sous diverses formes.

De manière similaire à l'art antérieur, le circuit d'alimentation comporte des vannes d'injection d'air 9 permettant de moduler de manière fine la puissance thermique injectée dans les diverses zones du compartiment 1 afin d'en contrôler localement la température. Dans cette forme de réalisation, les vannes d'injection 9 sont montées dans des branches d'injection prenant naissance en amont du pack de conditionnement d'air 2 et débouchant dans le compartiment 1 au niveau des sorties de distribution d'air S comme représenté sur les figures 2 et 3.

Le système de conditionnement d'air selon la première forme de réalisation est avantageusement compact et léger. Son intégration à un aéronef existant est simple à mettre en oeuvre. De manière préférée, les branches de chauffage B1 et de refroidissement B2 ainsi que les moyens de commutation sont rassemblés sous la forme d'un module de conditionnement thermique indépendant pouvant être connecté au dispositif de puissance auxiliaire 4 avant d'alimenter le pack de conditionnement d'air 2

### 2. Deuxième forme de réalisation

Selon une deuxième forme de réalisation, en référence à la figure 4, le dispositif de puissance auxiliaire 4 reçoit un flux d'air F_{EXT} prélevé à l'extérieur de l'aéronef et le comprime pour former un flux d'air comprimé alimentant le système de conditionnement d'air. Dans cette deuxième forme de réalisation, le dispositif auxiliaire de puissance 4 est adapté pour fournir simultanément sur deux circuits distincts (et non pas alternativement sur un seul et unique circuit) un flux d'air chaud comprimé à basse pression F_{APU-BP}, et un flux d'air « froid » ou, plus précisément « pré-refroidi », comprimé à haute pression F_{APU-HP}. Dans cet exemple, le dispositif auxiliaire de puissance 4 se présente sous la forme d'un compresseur comportant un étage basse pression 41 et un étage haute pression 42 fournissant respectivement les flux d'air chaud comprimé à basse pression F_{APU-BP} et « froid » à haute pression F_{APU-HP}. Dans cette deuxième forme de réalisation, le pack de conditionnement d'air 2 ne comporte qu'une seule branche comportant un dispositif de refroidissement. Le pack de conditionnement d'air 2 régule la température injectée dans le compartiment 1 en mitigeant les deux flux basse pression F_{APU-BP} et haute pression F_{APU-HP}.

Le circuit d'alimentation comporte des moyens de commutation se présentant sous la forme d'une première vanne basse pression 83 agencée pour recevoir le flux comprimé à basse pression F_{APU-BP} et réguler le débit d'air chaud envoyé au mélangeur 3 et d'une première vanne haute pression 85 agencée pour recevoir le flux comprimé à haute pression F_{APU-HP} et réguler le débit d'air froid envoyé au mélangeur 3.

Comme représenté sur la figure 4, le circuit d'alimentation comporte, entre l'étage basse pression du compresseur 41 et la première vanne basse pression 83, deux branches d'alimentation en parallèle : une branche de chauffage B1 dans laquelle sont situés les moyens de chauffage 6 et une branche de déviation B3 dénuée de tels moyens de chauffage 6. Les moyens de commutation comportent aussi une deuxième vanne basse pression 84 permettant de répartir le flux comprimé à basse pression F_{APU-BP} issu du compresseur du dispositif de puissance auxiliaire 4 entre les deux branches B1, B3 et ainsi contrôler ou limiter la température du flux comprimé à basse pression F_{APU-BP} reçu par l'échangeur 3.

De manière similaire à la première forme de réalisation, les moyens de commutation comportent aussi une deuxième vanne haute pression 86 (identique à la deuxième vanne 82 de la première forme de réalisation) agencée pour limiter le débit du flux d'air de refroidissement F_{REF}, prélevé à l'extérieur de l'aéronef, qui alimente les moyens de refroidissement 7 de la deuxième branche de refroidissement B2.

Les premières vannes basse pression 83 et haute pression 85 des moyens de commutation permettent au système de conditionnement d'air respectivement de réguler le débit des flux d'air chaud basse pression F_{APU-BP} et « froid » haute pression F_{APU-HP} reçus par le mélangeur 3 ce qui permet de ventiler de manière optimale le compartiment 4 et, ce, en limitant la consommation d'énergie.

Les deuxièmes vannes basse pression 84 et haute pression 86 des moyens de commutation permettent respectivement de réguler l'apport de calories/frigories dans les débits des flux d'air basse pression F_{APU-BP} et haute pression F_{APU-HP} reçus par le mélangeur 3. De manière avantageuse, les calories sont récupérées à l'échappement du dispositif de puissance auxiliaire 4. La température d'air de ventilation est parfaitement maîtrisée dans le compartiment 1.

De manière similaire à la première forme de réalisation, les moyens de commutation 83-86 sont avantageusement commandables de manière à modifier le point de fonctionnement du compresseur du dispositif de puissance auxiliaire 4 de manière à limiter sa consommation lors du chauffage ou du refroidissement.

Le compresseur du dispositif auxiliaire de puissance 4 peut comprendre un ou plusieurs arbres. L'étage basse pression est de préférence dimensionné pour être capable de fournir une pression suffisante pour alimenter le compartiment 1 au cours du vol de l'aéronef.

De manière similaire à l'art antérieur, le circuit d'alimentation comporte des vannes d'injection d'air 9 permettant de moduler de manière fine la puissance thermique injectée dans les diverses zones du compartiment 1 afin d'en contrôler localement la température. En référence à la figure 4, les vannes d'injection 9 sont montées dans des branches d'injection prenant naissance au niveau des branches de chauffage B1 et de déviation B3 et débouchant dans le compartiment 1 au niveau des sortie de distribution d'air S du compartiment 1.

Dans une variante de la deuxième forme de réalisation, le système de conditionnement d'air comporte deux dispositifs auxiliaires de puissance pour assurer une redondance, chaque dispositif auxiliaire de puissance pouvant alimenter les deux circuits d'alimentation chaud et « froid ».

Il a été présenté précédemment un système de conditionnement d'air permettant de fournir un flux d'air chaud et un flux d'air froid mais il va de soi que le système de conditionnement d'air est apte à mitiger les flux d'air chaud et froid.

Par ailleurs, il a été présenté des moyens de refroidissement 7 agencés pour apporter des frigories au flux d'air de la deuxième branche de refroidissement B2 par circulation d'un flux d'air de refroidissement F_{REF} prélevé à l'extérieur de l'aéronef. Il va de soi que tout autre flux d'air pourrait apporter des frigories. De manière préférée, le flux d'air de sortie du compartiment G est utilisé dans les moyens de refroidissement 7 pour refroidir le flux d'air de la deuxième branche de refroidissement B2.

Selon un aspect de l'invention, le flux d'air de sortie du compartiment G est injecté dans une turbine de récupération (non représentée) afin de produire de l'énergie mécanique sous un forme ou une autre (électrique, pneumatique, etc.). De manière préférée, l'injection est réalisée après circulation du flux d'air de sortie du compartiment G dans les moyens de refroidissement 7. Ainsi, le flux d'air de sortie du compartiment G est chauffé et possède une énergie plus importante lors de son injection ce qui est avantageux.

## Revendications

1. Système de conditionnement d'air d'un compartiment (1) pour passagers d'un aéronef, le système comportant :
- un circuit d'alimentation en air reliant au moins une entrée d'air extérieur (E) à au moins une sortie de distribution d'air (S) apte à déboucher dans le compartiment (1),
- un dispositif auxiliaire de puissance (4) monté dans ledit circuit d'alimentation et agencé pour comprimer un flux d'air dans le circuit d'alimentation, comportant:
- une première branche de chauffage (B1), reliant le dispositif auxiliaire de puissance (4) à la sortie de distribution d'air (S),
- une deuxième branche de refroidissement (B2), reliant le dispositif auxiliaire de puissance (4) à la sortie de distribution d'air (S), et
- des moyens de commutation (81-86) adaptés pour répartir le flux d'air entre la première branche de chauffage (B1) et la deuxième branche de refroidissement (B2),
**caractérisé par le fait que** des moyens de chauffage (6) du flux d'air sont montés dans la prémière branche de chauffage.

2. Système selon la revendication 1, dans lequel la deuxième branche de refroidissement (B2) comporte des moyens de refroidissement (7) du flux d'air du circuit d'alimentation.

3. Système selon la revendication 2, dans lequel les moyens de refroidissement (7) se présentent sous la forme d'un échangeur de chaleur agencé pour apporter des frigories au flux d'air du circuit d'alimentation par circulation d'un flux d'air de refroidissement (F_{REF}).

4. Système selon l'une des revendications 1 à 3, dans lequel les moyens de commutation (81-86) sont agencés pour modifier le point de fonctionnement du dispositif auxiliaire de puissance (4) lors du chauffage

5. Système selon l'une des revendications 1 à 4, dans lequel les moyens de chauffage (6) se présentent sous la forme d'un échangeur de chaleur agencé pour apporter des calories au flux d'air du circuit d'alimentation par circulation d'un flux d'air de chauffage (F_{ECH}) issu des gaz d'échappement du dispositif auxiliaire de puissance (4).

6. Système selon l'une des revendications 1 à 5, dans lequel, la deuxième branche de refroidissement (B2) comportant des moyens de refroidissement (7) du flux d'air du circuit d'alimentation, la première branche de chauffage (B1) est reliée à la deuxième branche de refroidissement (B2) en amont des moyens de refroidissement (7) de manière à faire circuler le flux d'air chauffé dans les moyens de refroidissement (7).

7. Système selon la revendication 6, dans lequel les moyens de commutation (81-86) sont agencés pour inactiver les moyens de refroidissement (7) lorsqu'un flux d'air chauffé circule dans les moyens de refroidissement (6).

8. Système selon l'une des revendications 1 à 7, dans lequel, le circuit d'alimentation comportant un mélangeur (3) alimentant la sortie de distribution d'air (S), la première branche de chauffage (B1), reliant le dispositif auxiliaire de puissance (4) au mélangeur (3) et la deuxième branche de refroidissement (B2), reliant le dispositif auxiliaire de puissance (4) au mélangeur (3), sont distinctes.

9. Système selon la revendication 8, dans lequel, le dispositif auxiliaire de puissance (4) comportant une sortie d'air basse pression (F_{APU-BP}) et une sortie d'air haute pression (F_{APU-HP}), la première branche de chauffage (B1) est reliée à la sortie d'air basse pression (F_{APU-BP}) et la deuxième branche de refroidissement (B2) est reliée à la sortie d'air haute pression (F_{APU-HP}).

10. Système selon l'une des revendications 8 à 9, dans lequel, le circuit d'alimentation comporte une branche de déviation (B3) montée en parallèle à la première branche de chauffage (B1) de manière à alimenter le mélangeur (3) avec un flux d'air basse pression (F_{APU-BP}) non chauffé par les moyens de chauffage (6).

## Patentansprüche

1. Klimatisierungssystem eines Passagierabteils (1) eines Luftfahrzeugs, wobei das System aufweist:
- einen Luftversorgungskreis, der mindestens einen Außenlufteinlass (E) mit mindestens einem Luftverteilungsauslass (S) verbindet, der geeignet ist, in das Abteil (1) zu münden,
- ein Hilfstriebwerk (4), das in den Versorgungskreis geschaltet ist und dafür ausgelegt ist, einen Luftstrom in dem Versorgungskreis zu verdichten,
welcher aufweist:
- einen ersten Heizzweig (B1), der das Hilfstriebwerk (4) mit dem Luftverteilungsauslass (S) verbindet, und
- einen zweiten Kühlzweig (B2), der das Hilfstriebwerk (4) mit dem Luftverteilungsauslass (S) verbindet, und
- Umschaltmittel (81-86), die dazu eingerichtet sind, den Luftstrom zwischen dem ersten Heizzweig (B1) und dem zweiten Kühlzweig (B2) aufzuteilen,
**dadurch gekennzeichnet, dass** Mittel zur Erwärmung (6) des Luftstroms in den ersten Heizzweig geschaltet sind.

2. System nach Anspruch 1, wobei der zweite Kühlzweig (B2) Mittel zur Kühlung (7) des Luftstroms des Versorgungskreises aufweist.

3. System nach Anspruch 2, wobei die Mittel zur Kühlung (7) die Form eines Wärmetauschers aufweisen, der dafür ausgelegt ist, dem Luftstrom des Versorgungskreises Kälte durch Zirkulation eines Kühlluftstroms (F_{REF}) zuzuführen.

4. System nach einem der Ansprüche 1 bis 3, wobei die Umschaltmittel (81-86) dafür ausgelegt sind, den Betriebspunkt des Hilfstriebwerks (4) bei der Erwärmung zu verändern.

5. System nach einem der Ansprüche 1 bis 4, wobei die Mittel zur Erwärmung (6) die Form eines Wärmetauschers aufweisen, der dafür ausgelegt ist, dem Luftstrom des Versorgungskreises Wärme durch Zirkulation eines Heizluftstroms (F_{ECH}) zuzuführen, der von den Abgasen des Hilfstriebwerks (4) stammt.

6. System nach einem der Ansprüche 1 bis 5, wobei, während der zweite Kühlzweig (B2) Mittel zur Kühlung (7) des Luftstroms des Versorgungskreises aufweist, der erste Heizzweig (B1) mit dem zweiten Kühlzweig (B2) stromaufwärts der Mittel zur Kühlung (7) verbunden ist, derart, dass ein Zirkulieren des erwärmten Luftstroms in den Mitteln zur Kühlung (7) bewirkt wird.

7. System nach Anspruch 6, wobei die Umschaltmittel (81-86) dafür ausgelegt sind, die Mittel zur Kühlung zu deaktivieren, wenn ein erwärmter Luftstrom (7) in den Mitteln zur Kühlung (6) zirkuliert.

8. System nach einem der Ansprüche 1 bis 7, wobei, während der Versorgungskreis einen Mischer (3) aufweist, der den Luftverteilungsauslass (S) versorgt, der erste Heizzweig (B1), der das Hilfstriebwerk (4) mit dem Mischer (3) verbindet, und der zweite Kühlzweig (B2), der das Hilfstriebwerk (4) mit dem Mischer (3) verbindet, verschieden sind.

9. System nach Anspruch 8, wobei, während das Hilfstriebwerk (4) einen Niederdruck-Luftauslass (F_{APU-BP}) und einen Hochdruck-Luftauslass (F_{APU-HP}) aufweist, der erste Heizzweig (B1) mit dem Niederdruck-Luftauslass (F_{APU-BP}) verbunden ist und der zweite Kühlzweig (B2) mit dem Hochdruck-Luftauslass (F_{APU-HP}) verbunden ist.

10. System nach einem der Ansprüche 8 bis 9, wobei der Versorgungskreis einen Umgehungszweig (B3) aufweist, der zu dem ersten Heizzweig (B1) parallel geschaltet ist, derart, dass er den Mischer (3) mit einem Niederdruck-Luftstrom (F_{APU-BP}) versorgt, der nicht von den Mitteln zur Erwärmung (6) erwärmt wird.

## Claims

1. Air conditioning system for an aircraft passenger compartment (1), the system including:
- an air supply circuit connecting at least one external air inlet (E) to at least one air distribution outlet (S) capable of opening into the compartment (1),
- an auxiliary power unit (4) mounted in said supply circuit and arranged so as to compress an air stream in the supply circuit,
comprising:
- a heating first branch (B1) connecting the auxiliary power unit (4) to the air distribution outlet (S),
- a cooling second branch (B2) connecting the auxiliary power unit (4) to the air distribution outlet (S), and
- switching means (81-86) adapted to distribute the air stream between the heating first branch (B1) and the cooling second branch (B2).
**characterized in that** means for heating (6) the air stream are mounted on the heating first branch,

2. System according to Claim 1, wherein the cooling second branch (B2) includes means for cooling (7) the air stream of the supply circuit.

3. System according to Claim 2, wherein the cooling means (7) are presented in the form of a heat exchanger arranged so as to provide cooling to the air stream of the supply circuit by circulation of a cooling air stream (F_{REF}).

4. System according to any of Claims 1 to 3, wherein the switching means (81-86) are arranged so as to modify the point of operation of the auxiliary power unit (4) during the heating.

5. System according to any of Claims 1 to 4, wherein the heating means (6) are presented in the form of a heat exchanger arranged so as to provide calories to the air stream of the supply circuit by circulation of a heating air stream (F_{ECH}) coming from the exhaust gases from the auxiliary power unit (4).

6. System according to any of Claims 1 to 5, wherein as the cooling second branch (B2) includes means for cooling (7) the air stream of the supply circuit, the heating first branch (B1) is connected to the cooling second branch (B2) upstream of the cooling means (7) in such a way as to make the heated air stream circulate in the cooling means (7).

7. System according to Claim 6, wherein the switching means (81-86) are arranged so as to inactivate the cooling means (7) when a heated air stream circulates in the cooling means (6).

8. System according to any of Claims 1 to 7, wherein the supply circuit which includes a mixer (3) supplying the air distribution outlet (S), the heating first branch (B1) connecting the auxiliary power unit (4) to the mixer (3), and the cooling second branch (B2) connecting the auxiliary power unit (4) to the mixer (3), are separate.

9. System according to Claim 8, wherein as the auxiliary power unit (4) includes a low-pressure air outlet (F_{APU-BP}) and a high-pressure air outlet (F_{APU-HP}), the heating first branch (B1) is connected to the low-pressure air outlet (F_{APU-BP}) and the cooling second branch (B2) is connected to the high-pressure air outlet (F_{APU-HP}).

10. System according to any of Claims 8 to 9, wherein the supply circuit includes a diversion branch (B3) mounted in parallel with the heating first branch (B1) so as to be able to supply the mixer (3) with a low-pressure air stream (F_{APU-BP}) which is not heated by the heating means (6).
